Europäisches Patentamt

European Patent Office

Office européen des brevets

(19)

(11) **EP 1 093 117 A2**

## (12) EUROPEAN PATENT APPLICATION

(43) Date of publication:
**18.04.2001 Bulletin 2001/16**

(51) Int. Cl.[7]: **G11B 5/00**

(21) Application number: **00101001.6**

(22) Date of filing: **19.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.10.1999 JP 29016999**

(71) Applicant:
**DAIDO TOKUSHUKO KABUSHIKI KAISHA**
**Naka-ku Nagoya-shi Aichi-ken (JP)**

(72) Inventor: **Kondo, Michio**
**Nagoya-shi, Aichi (JP)**

(74) Representative:
**Diehl, Hermann, Dr. et al**
**DIEHL, GLÄSER, HILTL & PARTNER,**
**Augustenstrasse 46**
**80333 München (DE)**

### (54) Contact magnetic head supporting structure

(57)     A contact magnetic head (50) is supported by a support (60) having two support beams (76a, 76a) each of which is constituted by first (76b, 76b) and second beams (76c, 76c) provided to extend in the directions opposite to each other. A predetermined pressure force is given to the contact magnetic head (50) by a pivot spring (68). Then, the two support beams (76b, 76c) may be connected by first (72f) and second bridges (72g). In addition, the pivot spring (68) may be constituted by arm portions (68b) and a load giving beam (68c) provided to extend in the directions opposite to each other. The pressure force may be adjusted by flexible portions (68d) provided at the base ends and tips of the arm portions (68b).

**FIG.1A**

EP 1 093 117 A2

**Description**

The present invention relates to a structure for supporting a contact magnetic head having a contact pad.

A floppy disk and a hard disk are known as magnetic recording media generally used in a personal computer. The floppy disk is an exchangeable magnetic recording medium, and has a feature in that it can be carried easily and it is durable against an impact, though it is inferior in recording density to the hard disk. On the other hand, the hard disk is a fixed magnetic recording medium and has a feature in that it is high in recording density and also high in recording/reproducing speed, though it cannot be extracted from a unit and it is weak in an impact.

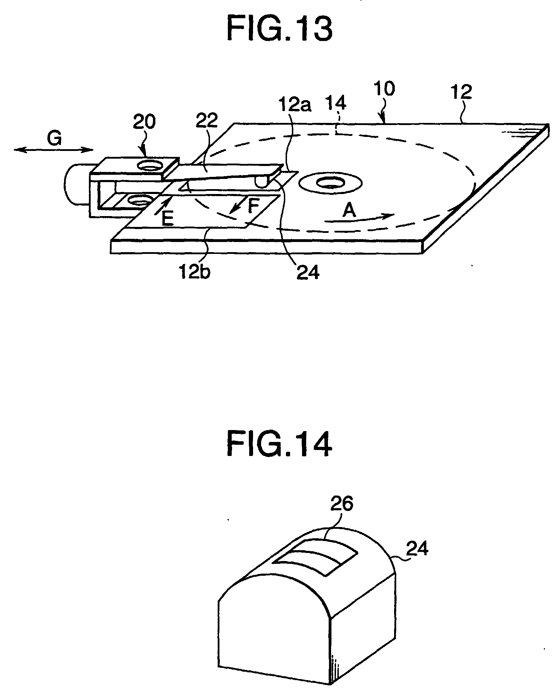

Fig. 13 shows an example of a floppy disk and a tracking mechanism therefor. In Fig. 13, a floppy disk 10 is constituted by a flexible magnetic disk 14 and a card case 12 for receiving the flexible magnetic disk 14. The card case 12 is provided with a window 12a which is arranged so as to be opened/closed by a cover 12b urged in the direction of the arrow E. The reason why the magnetic disk 14 is received in the card case 12 is that the surface of the magnetic disk 14 is protected from dust or the like, and the flexible magnetic disk 14 is flattened by the Bernoulli effect so that the electric characteristics of the flexible magnetic disk 14 is stabilized.

Further, recording/reproducing on the floppy disk 10 is performed as follows. The cover 12b is slid in the direction of the arrow F so that the window 12a opens. An adapter 22 is moved forward/backward in the direction of the arrow G through a tracking mechanism 20 while the magnetic disk 14 is rotated in the direction of the arrow A. The magnetic head 24 provided on the tip of the adapter 22 is moved onto a predetermined track. Such a tracking system is generally called a transverse system. In the transverse system, the movable range of the adapter 22 is narrow so that the area of the window 12a can be made small. Therefore, the transverse system is used chiefly as the tracking system for the floppy disk 10.

Further, as shown in Fig. 14, a bulk magnetic head 24 having a magnetic pole 26 on its tip which has a predetermined curvature radius is generally used as the magnetic head for the floppy disk 10.

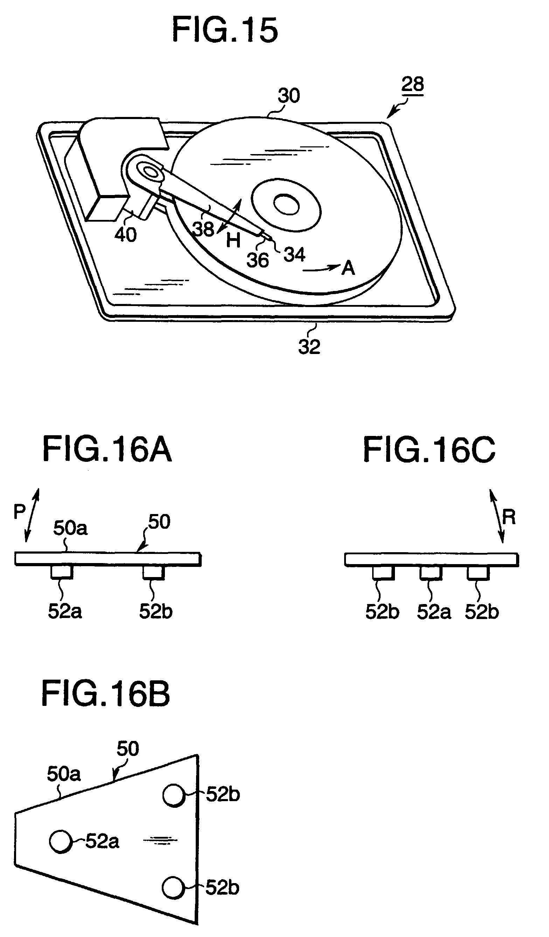

On the other hand, Fig. 15 shows an example of a hard disk unit. In Fig. 15, a hard disk unit 28 is designed so that a hard disk 30 of an aluminum alloy or the like, a magnetic head 34, and a drive constituted by an actuator 40 and the like are integrated and put into a card case 32 tightly. The magnetic head 34 is attached to the tip of an adapter 38 through a bearer 36. The base end of the adapter 38 is attached to the actuator 40.

Further, recording/reproducing on the hard disk 30 is performed as follows. The actuator 40 rocks the adapter 38 in the direction of the arrow H while the hard disk 30 is rotated in the direction of the arrow A. The magnetic head 34 is moved onto a predetermined track. Such a tracking system is generally called an in-line system. In the in-line system, the magnetic head 34 can be positioned easily. The in-line system is suitable for high-density recording/reproducing. Therefore, the in-line system is used chiefly as the tracking system for the hard disk 30.

Further, though not shown, a non-contact magnetic head having an air slider is generally used as the magnetic head for the hard disk 30. However, since the hard disk 30 and the magnetic head 34 are preferably put in direct contact with each other in order to improve the recording density, a contact magnetic head has been recently watched in the field of a magnetic head for a hard disk.

Fig. 16 shows an example of a contact magnetic head. In Fig. 16, a contact magnetic head 50 is formed by mounting three contact pads on one side of a substantially triangular sheet-like head chip 50a. One of the contact pads is a magnetic pole pad 52a having a magnetic pole, and the other two are auxiliary pads 52b and 52b having no magnetic pole.

There are various disclosures about a support structure for attaching such a contact magnetic head 50 to the adapter 38. For example, JP-A-9-198823 discloses a structure for supporting a contact magnetic head in which a contact magnetic head is attached to a support of flexible material and pressed by a contact pressure giving means.

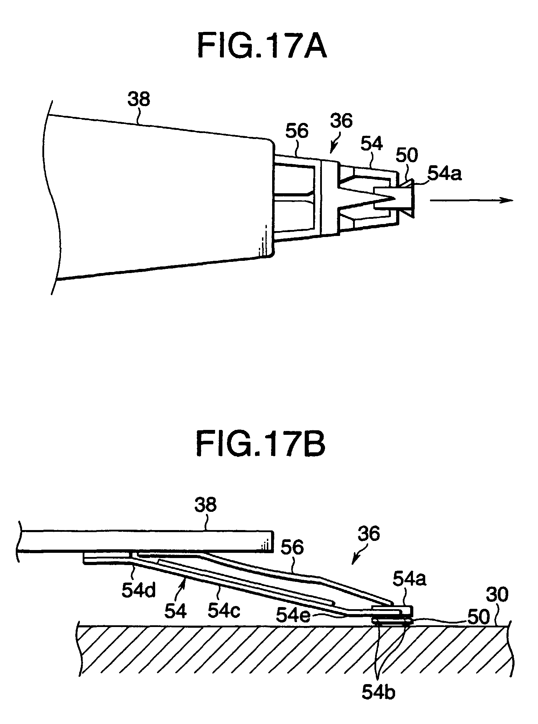

Fig. 17 shows an example of such a structure for supporting a contact magnetic head. In Fig. 17, a bearer 36 is constituted by a beam-like support 54 and a pivot spring (contact pressure giving means) 56. A fitting portion 54a is provided on the tip of the support 54. A contact magnetic head 50 is attached to the fitting portion 54a through connecting pads 54b and 54b. Further, the base end of the support 54 is connected to the adapter 38. Further, a rigid portion 54c is provided at the center of the support 54. Flexible portions 54d and 54e are provided on the opposite sides of the rigid portion 54c.

According to the structure for supporting a contact magnetic head shown in Fig. 17, even if an assembly error is produced in the pitching direction (the direction of the arrow P in Fig. 16(a)) of the contact magnetic head 50 or the rolling direction (the direction of the arrow R in Fig. 16(c)) of the same, the three contact pads 52a, 52b and 52b can be pressed onto the hard disk 30 with uniform contact pressure by the pivot spring 56, and fluctuations in the height between the hard disk 30 and the adapter 38 (hereinafter, this will be referred to as "Z-height") are absorbed by the flexible portions 54d and 54e so that stable recording/reproducing can be performed.

Incidentally, the contact magnetic head 50 as shown in Fig. 16 by way of example is generally produced, by using a lithographic technique so as to have the track width in a range of from 2 μm to 10 μm. Therefore, there is an advantage that the recording density can be increased.

On the other hand, the bulk magnetic head 24 generally used for a floppy disk in the background art has the track width in a range of from 50 μm to 200 μm. Therefore, there has been a problem that the recording density cannot be made high in comparison with that in the hard disk. Accordingly, if the contact magnetic head 50 having such a structure as shown in Fig. 16 is applied to the floppy disk 10, it can be expected to realize high recording density in the floppy disk.

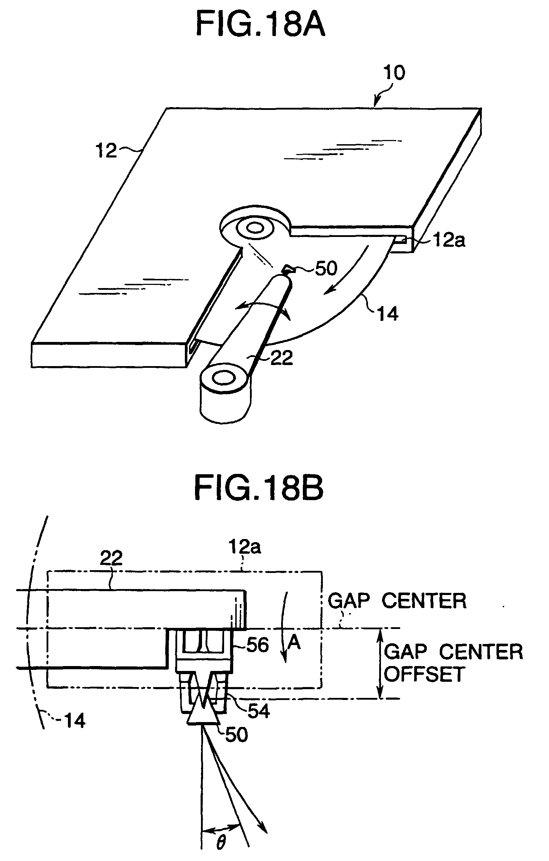

However, in order that a support structure developed for the in-line system is appropriated directly to the exchangeable floppy disk 10, it is necessary to increase the area of the window 12a in accordance with the movable range of the adapter 22, as shown in Fig. 18A. If the area of the window 12a is increased, there arises a problem that dust or the like invades the card case 12 easily to thereby damage the surface of the magnetic disk 14. In addition, if the area of the window 12a is increased, there is a problem that the Bernoulli effect deteriorates and the flexible magnetic disk 14 waves during its rotation, so that the electric characteristics of the magnetic disk 14 become unstable.

On the contrary, if a transverse system is still used as the tracking system for the floppy disk and the support 54 and the pivot spring 56 are attached perpendicularly to the longitudinal direction of the adapter 22, the area of the window 12a can be reduced in comparison with the case where the in-line system is used as the tracking system for the floppy disk.

However, the size of the window 12a of the floppy disk 10 is standardized as 8×24 mm. Therefore, if the structure for supporting the hard disk 30 is appropriated directly to the floppy disk 10, there is a problem that the contact magnetic head 50 cannot be settled within the window 12a as shown in Fig. 18B. In addition, even if the lateral width of the window 12a is increased, a magnetic gap on the tip of the magnetic pole pad runs the position away, by a predetermined distance (hereinafter, this will be referred to as "gap center offset"), from a gap center (a straight line which passes through the rotation center of the magnetic disk 14). Therefore, there is a problem that a skew angle θ is produced on the head tip so as to lower the electromagnetic conversion efficiency in recording/reproducing.

In order to solve this problem, it can be also considered that the support 54 is shortened. However, the Z-height is also standardized. Therefore, in order to appropriate the support structure for the hard disk 30 directly to the floppy disk 10, it is necessary to shorten only the support 54 while keeping the Z-height at a standard value. In addition, since the Z-height has a tolerance range, the Z-height of each assembled magnetic head fluctuates within the tolerance range.

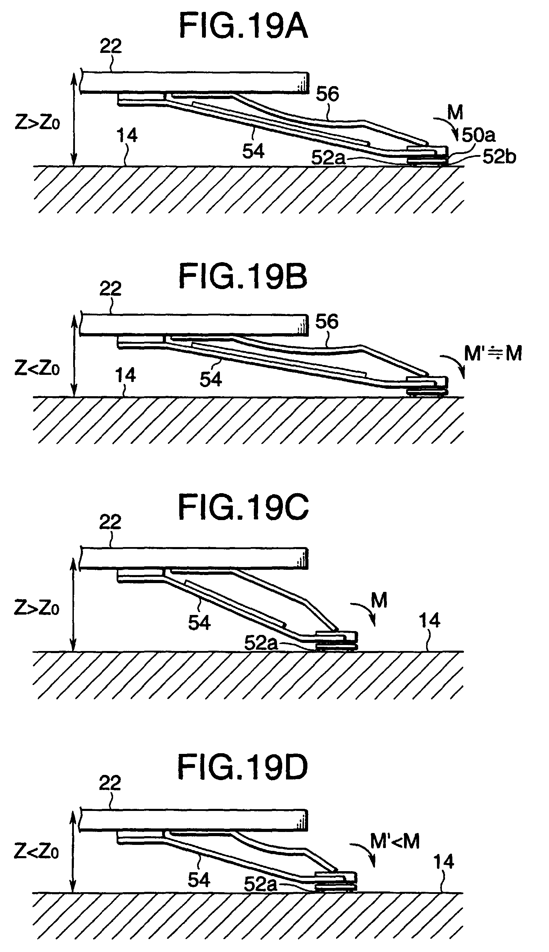

Therefore, in the case where the support 54 has a certain measure of length, even if the Z-height (Z) is larger than a set value $Z_0$ (Fig. 19A) or smaller (Fig. 19B) within the tolerance range, the fluctuations in reaction torque M acting on the contact magnetic head 50 is so small that contact loads on the respective contact pads 52a, 52b and 52b can be kept substantially equal if the position of the head chip 50a relative to the support 54, and the position where the pivot spring 56 applies a load are adjusted.

However, in the case where the support 54 is shortened, the reaction torque M becomes too large when the Z-height (Z) is larger than the set value $Z_0$ (Fig. 19C). As a result, there is a problem that only a small load is applied to the magnetic pole pad 52a, so that stable contact is not kept. On the other hand, when the Z-height (Z) is smaller than the set value $Z_0$ (Fig. 19D), reaction torque M' becomes too small. As a result, there is a problem that a large load is applied to the magnetic pole pad 52a, so that the abrasion of the magnetic pole pad 52a is accelerated.

Such load imbalance can be prevented by making the tolerance range of the Z-height small. However, the width of the window 12a is severely restricted particularly in a contact magnetic head for a floppy disk, so that the tolerance range of the Z-height enabling stable running becomes extremely small. Accordingly, it is difficult to attain such a small tolerance range of the Z-height practically.

Further, a floppy disk has been recently requested not only to make its recording density high but also to make its size small. This is because, if a floppy disk can be miniaturized, wider application of the floppy disk, for example, such as a digital camera, a digital AV, etc. can be expected. To that end, not only is it necessary to make the track width narrower, but also it is necessary to make the lateral width of the window 12a narrower. However, in the support structure shown in Fig. 18B, it is necessary to make the support shorter as the lateral width of the window 12a becomes narrower. There is therefore a problem that this accelerates the load imbalance, so that stable contact running becomes more difficult.

Further, when the support is long, it is comparatively easy to increase the rigidity of the support as a whole, so that self-induced vibration of the contact magnetic head hardly occurs in contact running. On the contrary, when the support is shortened in the case where a friction coefficient between a contact pad and a magnetic recording medium is large, there is a problem that self-induced vibration is easy to produce, so that high-density recording/reproducing becomes difficult.

It is therefore the object of the present invention to provide a structure for supporting a contact magnetic head which overcomes the drawbacks of the prior art products. This object is solved by the structure according to independent claim 1. Further advantageous features, aspects and details of the invention are evident from the dependent claims, the description and the drawings.

The invention particularly relates to a structure for supporting a contact magnetic head which is suitable for high-density recording/reproducing on a floppy disk used in a computer, a digital camera, a digital AV, etc.

It is an aspect of the present invention to provide a structure for supporting a contact magnetic head which can prevent production of a gap center offset and contamination on the surface of a magnetic recording medium due to the invasion of dust or the like even if the support structure is used for recording/reproducing a magnetic recording medium in which a transverse system is adopted, such as a floppy disk or the like.

It is another aspect of the present invention to provide a structure for supporting a contact magnetic head which can make stable contact running and restrain a magnetic pole from abrasion even if the tolerance range of Z-height is set to be wide, or even if the support structure is applied to a small-sized magnetic recording medium having a window the width of which is narrow.

It is a further aspect of the present invention to provide a structure for supporting a contact magnetic head in which self-induced vibration is difficult to produce even if there is a comparatively large friction coefficient between a contact pad and a magnetic recording medium.

In order to achieve the above object and aspects, according to the present invention, there is provided a structure for supporting a contact magnetic head having a contact pad with a magnetic pole, the structure comprising a support having a support beam formed from elastic material and for supporting the contact magnetic head, and a contact pressure giving means for giving pressure to a contact surface between the contact pad and a magnetic recording medium, wherein the support beam includes a first beam and a second beam provided to have a base end near a tip of the first beam and extend from the base end in a direction opposite to the first beam.

In this case, preferably, the support includes two above-mentioned support beams for supporting the contact magnetic head. Further, the two support beams may be connected by at least one bridge. Particularly, the support beams are preferably connected by the bridge at the vicinities of the tips of the first beams.

Further, preferably, the contact pressure giving means includes an arm portion and a load giving beam provided to have a base end near a tip of the arm portion and extend from the base end in a direction opposite to the arm portion. Further, preferably, a flexible portion is provided near a base end and/or tip of the arm portion. Furthermore, preferably, the flexible portion is formed by bending the arm portion sideways.

According to the structure for supporting a contact magnetic head having a configuration described above, the support beam is constituted by a first beam and a second beam which is provided to extend from the vicinity of the tip of the first beam as its base end in the direction opposite to the first beam, so that it becomes easy to dispose a contact pad having a magnetic pole on the gap center. It is therefore possible to make the lowering of the electromagnetic conversion efficiency of the contact magnetic head minimum. In addition, it is possible to shorten the first beam while keeping the gap center offset substantially at zero, so that it is possible to reduce the window width of an exchangeable magnetic recording medium. Thus, contamination on the surface of the magnetic recording medium and deterioration of reliability due to the contamination are further restrained.

In addition, a predetermined pressure force is given by the contact pressure giving means to a contact magnetic head supported by the support beams each constituted by the first and second beams which are provided to extend in the directions opposite to each other, so that the fluctuations in a contact load due to the fluctuations in Z-height is reduced and abrasion of the magnetic pole is restrained. In addition, if the pressure force given by the contact pressure giving means is optimized, self-induced vibration is restrained even if there is a large friction coefficient between the contact pad and the magnetic recording medium.

The above-mentioned and other features of the present invention and the invention itself will be better understood by reference to the following detailed description of preferred embodiments of the invention, when considered in conjunction with the accompanying drawings, in which:

Fig. 1A is a plan view showing a structure for supporting a contact magnetic head according to a first embodiment of the present invention,
Fig. 1B is a front view of the structure for supporting a contact magnetic head;
Fig. 1C is a left side view of the structure for supporting a contact magnetic head;
Fig. 2A is a plan view of a base plate used in the support structure shown in Figs. 1A to 1C;
Fig. 2B is a front view of the base plate;
Fig. 3A is a plan view of an adapter used in the support structure shown in Figs. 1A to 1C;
Fig. 3B is a front view of the adapter;
Fig. 4A is a plan view of a pivot spring used in the support structure shown in Figs. 1A to 1C;
Fig. 4B is a right side view of the pivot spring;
Fig. 5A is a plan view of a support provided in the support structure shown in Figs. 1A to 1C;
Fig. 5B is a right side view of the support;
Fig. 5C is a bottom view of the support;
Fig. 6A is an enlarged plan view showing a state in which a contact magnetic head is attached to the tips of support beams of the support shown in Figs. 5A to 5C,

Fig. 6B is a right side view of Fig. 6A;

Fig. 6C is a front view of Fig. 6A;

Fig. 7A is a plan view showing a state in which the pivot spring is attached to the adapter;

Fig. 7B is its sectional view taken on line A-A' in Fig. 7A;

Fig. 8A is a plan view showing a state in which the support is further attached to the adapter mounted with the pivot spring;

Fig. 8B is a sectional view taken on line A-A' of Fig. 8A;

Fig. 9 is a view for explaining a method of using the support structure shown in Figs. 1A to 1C;

Fig. 10A is a plan view of a magnetic disk in which magnetic information is recorded with a magnetic head in which a large gap center offset is produced;

Fig. 10B is an enlarged plan view of the vicinity of a gap center;

Fig. 11 is a view showing a state in which the support structure shown in Fig. 17 is appropriated to a tracking mechanism for a floppy disk;

Fig. 12A is a plan view of a magnetic disk in which magnetic information is recorded with a magnetic head which hardly has a gap center offset;

Fig. 12B is an enlarged plan view of the vicinity of a gap center;

Fig. 13 is a view for explaining a method of using a floppy disk;

Fig. 14 is a perspective view of a background-art floppy disk magnetic head;

Fig. 15 is a view for explaining a method of using a hard disk;

Fig. 16A is a front view of a thin-film-type contact magnetic head;

Fig. 16B is a bottom view of the thin-film-type contact magnetic head;

Fig. 16C is a right side view of the thin-film-type contact magnetic head;

Fig. 17A is a plan view showing a background-art structure for supporting a contact magnetic head shown in Figs. 16A to 16C;

Fig. 17B is a front view of Fig. 17A;

Fig. 18A is a view showing a state in which an in-line-system tracking mechanism is applied to a floppy disk;

Fig. 18B is a view showing a state in which the support structure shown in Figs. 17A to 17B is attached to an adapter of a transverse-system tracking mechanism; and

Fig. 19 is a view for explaining the influence of the length and Z-height of support beams on torque generated in a contact magnetic head.

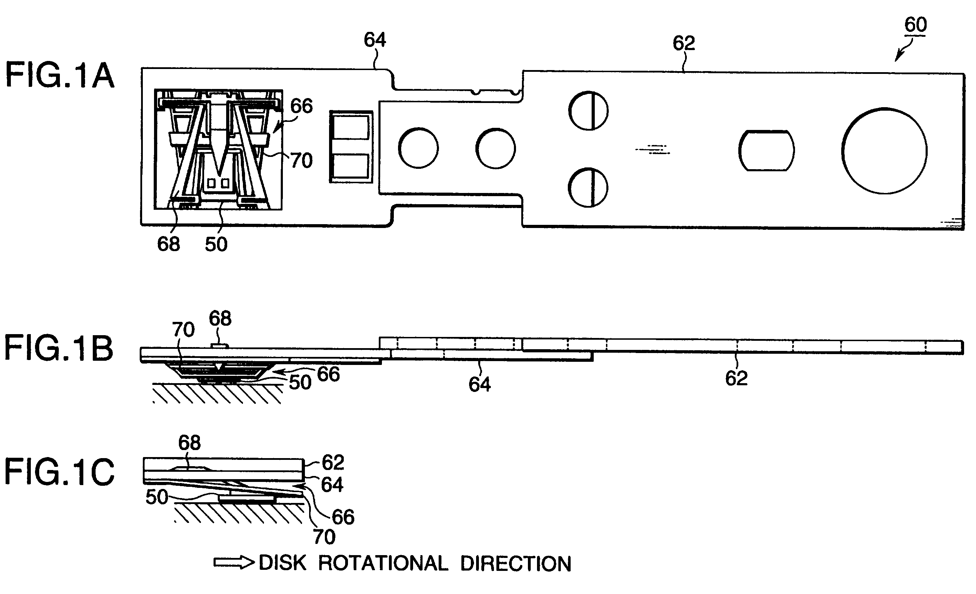

Detailed description of the invention will be made below referring to embodiments of the present invention with reference to the drawings. Figs. 1A to 1C show a structure for supporting a contact magnetic head according to an embodiment of the present invention. In Figs. 1A to 1C, a structure for supporting a contact magnetic head according to this embodiment (hereinafter, referred to as "support structure" simply) 60 has a base plate 62, an adapter 64 attached to the lower surface of the base plate 62, and a bearer 66 attached to the lower surface of the adapter 64. The bearer 66 is constituted by a pivot spring 68 and a support 70. A contact magnetic head 50 is attached to the support 70.

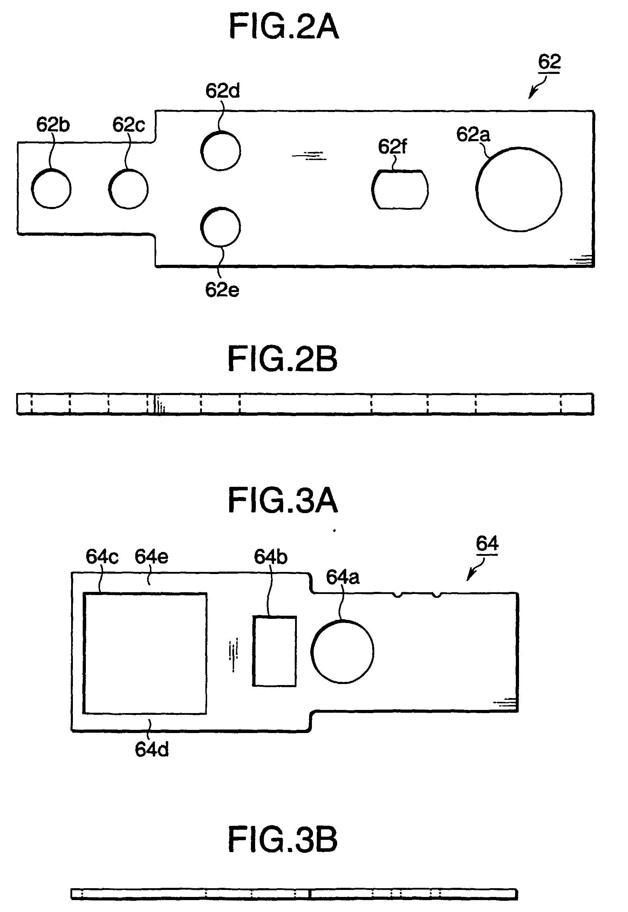

The base plate 62 is provided so as to be attached to a tracking mechanism 20 (see Fig. 13) for a floppy disk in which a transverse system is adopted. To that end, a threaded hole 62a for fixing the base plate 62 to the tracking mechanism 20 is provided at the base end of the base plate 62, as shown in Figs. 2A and 2B. On the tip side of the base plate 62, four round through holes 62b, 62c, 62d and 62e used for positioning the adapter 64 when the adapter 64 is welded are provided, and an oval through hole 62f also for positioning the adapter 64 is provided substantially at the center of the base plate 62.

The adapter 64 is used for connecting the base plate 62 with the bearer 66, and shaped like a battledore as shown in Figs. 3A and 3B. A round through hole 64a used for positioning the adapter 64 when the base plate 62 and the adapter 64 are welded is provided substantially at the center of the adapter 64. In addition, a quadrangular wiring window 64b is provided adjacently to the round through hole 64a, and a quadrangular opening portion 64c is provided on the tip side of the adapter 64. In this embodiment, the pivot spring 68 and the support 70 are fixed to side arm portions (hereinafter, these portions will be referred to as "left and right side arm portions" respectively) 64d and 64e located on the left and right of the opening portion 64c when those portions are viewed from the base end of the adapter 64 to the tip of the same, respectively.

Although this embodiment has such a configuration that the adapter 64 is fixed to the lower surface of the base plate 62, and the base plate 62 is fixed to the tracking mechanism 20, the adapter 64 may be fixed directly to the tracking mechanism 20.

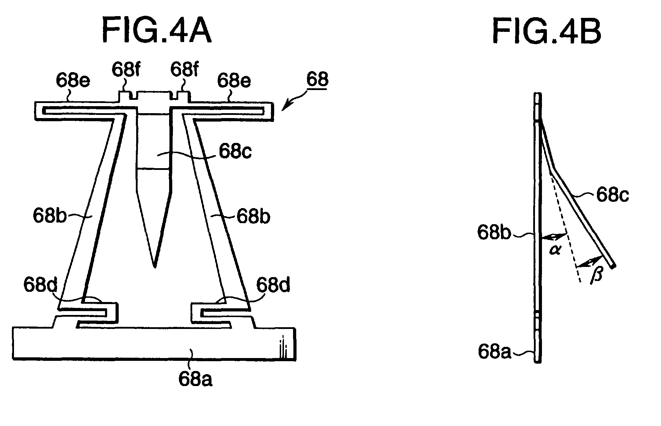

The pivot spring 68 has a base portion 68a, two arm portions 68b and 68b, and a load giving beam 68c, as shown in Figs. 4A and 4B. The base portion 68a is a portion for fixing the pivot spring 68 to the left arm portion 64d of the adapter 64.

The two arm portions 68b and 68b are provided to extend symmetrically from the vicinities of opposite ends of the base portion 68a toward the center respectively. A flexible portion 68d bent inward into a U-shape is provided on the base portion 68a side of each of the arm portions 68b and 68b. In addition, flexible portions 68e and 68e bent outward into a U-shape are provided on the tips of the two arm portions 68b and 68b respectively. These flexible portions 68d and 68e are portions for adjusting a pressure force given to the contact magnetic head by the load giving beam 68c.

The load giving beam 68c is provided to extend from the vicinities of the tips of the arm portions 68b and 68b toward the opposite direction to the arm portions 68b and 68b. In addition, the base end of the load giving beam 68c is integrated with the tips of the arm portions 68b and 68b through the flexible portions 68e and 68e. Here, in the plan view of Fig. 4A, the words "opposite direction" includes not only the case where the center line of the arm portions 68b and 68b is perfectly parallel with the center line of the load giving beam 68c but also the case where the former center line crosses the latter center line at an angle of 90° or less. The magnitude of the crossing angle between those center lines may be determined desirably in consideration of the shape of the pivot spring 68, the shape of the support 70, the difficulty of the producing process, and the like.

In addition, the load giving beam 68c is bent downward near its base end and substantially at its central portion at predetermined bending angles α and β respectively. Further, positioning protrusions 68f and 68f are provided at the base end of the load giving beam 68c.

An elastic material is used for the pivot spring 68 so that a predetermined pressure force is given to the contact magnetic head. In this embodiment, a sheet of stainless steel 20 to 25 μm thick is used. In addition, the bending angles α and β of the load giving beam 68c, the shapes of the flexible portions 68d and 68e and the shape of the arm portion 68b may be determined so that a predetermined pressure force is given substantially to the centroidal position of the contact magnetic head 50 by the load giving beam 68c.

When the pivot spring 68 is thus constituted by the arm portions 68b and 68b, and the load giving beam 68c which are provided to extend in opposite directions to each other, there is an advantage that it is made easy to attach both the pivot spring 68 and the support 70 into a narrow space on the tip of the adapter 64. In addition, when the flexible portions 68d and 68e are provided on the base end sides and on the tip sides, respectively, of the arm portions 68b and 68b, there is an advantage that it is possible to adjust the pressure force of the load giving beam 68c easily. Particularly in the case where the flexible portions 68d and 68e are provided by bending the arm portions 68b and 68b into a U-shape, the pressure force can be adjusted easily only by changing the length and lateral width of the flexible portions 68d and 68e.

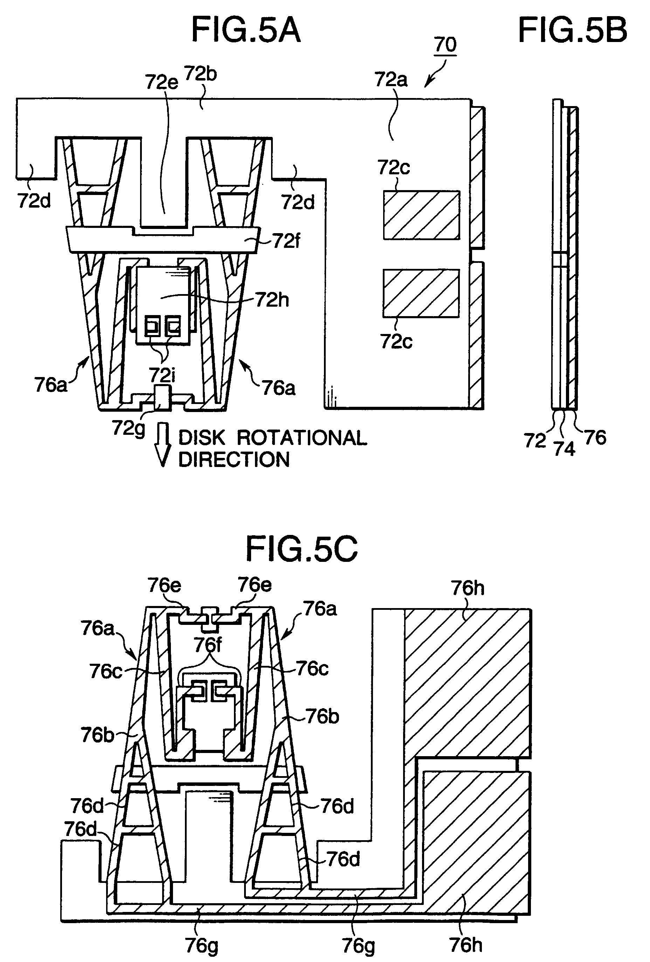

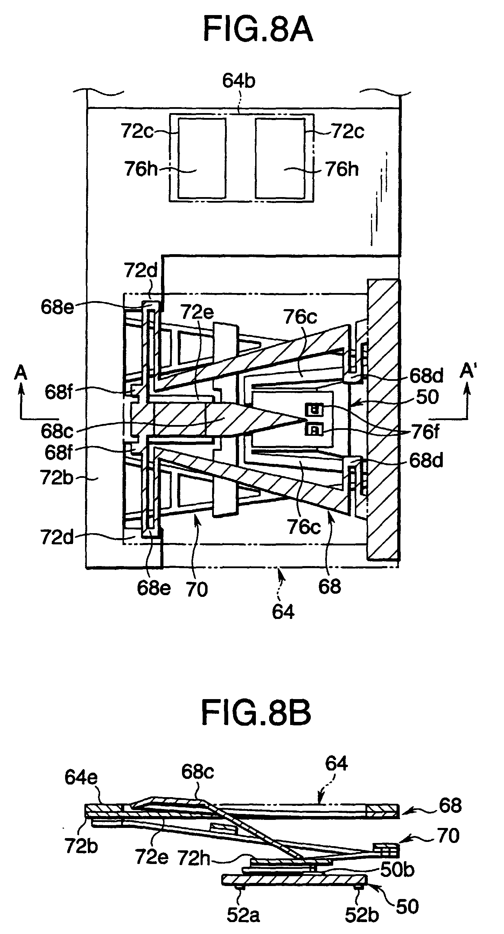

As shown in Figs. 5A to 5C, the support 70 is formed into an L-shape which is constituted by a base portion 72a and a strip portion 72b provided to extend from one side edge of the base portion 72a in the longitudinal direction of the adapter 64 (see, Fig. 8A). Two support beams 76a and 76a are provided to extend from the strip portion 72b in the rotational direction of a magnetic disk (not shown).

In addition, a three-layer laminate material constituted by a stiffener layer 72, an insulating layer 74, and a conductor layer 76 is used for the support 70 as shown in Fig. 5B. The stiffener layer 72 is formed of stainless steel 20 to 25 μm thick in order to give rigidity to the support 70. The insulating layer 74 is formed of a bonding agent 25 to 50 μm thick in order to ensure the insulation between the stiffener layer 72 and the conductor layer 76. The conductor layer 76 to be an electrode of a contact magnetic head (not shown) is formed of stainless steel 5 to 25 μm thick.

Incidentally, hatching is given to the conductor layer 76 in Figs. 5A to 5C in order to make it easy to see. The insulating layer 74 exists in the portion where the stiffener layer 72 and the conductor layer 76 are put on each other.

The base portion 72a formed of the stiffener layer 72 is provided with two wiring windows 72c and 72c from which the conductor layer 76 located in the lowermost layer of the support 70 is exposed. In addition, a mounting piece 72e for mounting thereon the base end portion of the load giving beam 68c of the pivot spring 68 is provided substantially at the center of the strip portion 72b so as to project therefrom. In addition, overhang portions 72d and 72d for mounting thereon the flexible portions 68e and 68e of the pivot spring 68 are provided on opposite ends of the strip portion 72b respectively.

The two support beams 76a and 76a formed of the conductor layer 76 have the same shapes. The support beams 76a and 76a are provided bilaterally symmetrically with respect to a magnetic pole pad (not shown) of the contact magnetic head attached to the tips of the support beams 76a and 76a. In addition, the support beams 76a and 76a have first beams 76b and 76b and second beams 76c and 76c respectively.

The first beams 76b and 76b are provided to extend from the strip portion 72b of the stiffener layer 72 as the base ends in the rotational direction of the magnetic disk and in parallel with the magnetic disk. The base end side of each of the first beams 76b and 76b has substantially a triangular shape, in which three through holes 76d, ... are provided for adjusting the rigidity of the first beam 76b. In addition, the first beams 76b and 76b are connected to each other substantially at the centers of the beams 76b and 76b by a first bridge 72f of the stiffener layer 72 through the insulating layer 74. Further, overhang pieces 76e and 76e which overhang inward are provided on the tips of the first beams 76b and 76b respectively. The tips of the respective overhang pieces 76e and 76e are connected with each other, through the insulating layer 74, by a second bridge 72g of the stiffener layer 72.

When the first beams 76b and 76b are thus fixed substantially at their respective centers by the first bridge 72f, there is an advantage that it is possible to restrain lateral self-induced vibration generated when the contact magnetic head follows a servo signal (vibration generated perpendicularly to the rotational direction of the disk), so that the accuracy in positioning the contact magnetic head is improved. In addition, when the tips of the first beams 76b and 76b are fixed by the second bridge 72g, there is an advantage that it is possible to restrain longitudinal self-induced vibration generated when the support beams 76a and 76a are opened/shut in the right and left directions (vibration generated in the rotation direction of the disk).

Further, the first beams 76b and 76b are connected to wiring portions 76h and 76h provided on the lower surface of the base portion 72a of the stiffener layer 72 through the lead wires 76g and 76g formed of the conductor layer 76, respectively.

The second beams 76c and 76c are provided to extend from the vicinities of the tip ends of the first beams 76b and 76b in the opposite direction to the first beams 76b and 76b and in parallel with the magnetic disk respectively. In addition, welded pieces 76f and 76f each formed into a substantially L-shape are provided to extend from the tips of the second beams 76c and 76c in parallel with the magnetic disk and in the direction opposite to the second beams 76c and 76c respectively.

In the same manner as in the case of the pivot spring 68, in the plan view of Fig. 5C, the words "opposite direction" includes not only the case where the center line of the first beams 76b, and the center line of the second beams 76c or the center line of the welded pieces 76f are perfectly parallel with each other, but also the case where those center lines cross each other at an angle of 90° or less. Then, the magnitude of the crossing angle between the center lines may be determined desirably, in consideration of the shape of the support 70, the shape of the pivot spring 68, the difficulty of the producing process, and the like, in the same manner as in the case of the pivot spring 68.

The welded pieces 76f and 76f are provided, through the insulating layer 74, with a mounting portion 72h formed of the stiffener layer 72. The mounting portion 72h is attached so that one side of the mounting portion 72h approaches the vicinities of the tips of the second beams 76c and 76c. The mounting portion 72h is designed to be bent downward at the vicinities of the tips of the second beams 76c and 76c when a pressure force is given to the mounting portion 72h by the load giving beam 68c. In addition, the mounting portion 72h is provided with two wiring windows 72i and 72i from which the tips of the left and right welded pieces 76f and 76f are exposed.

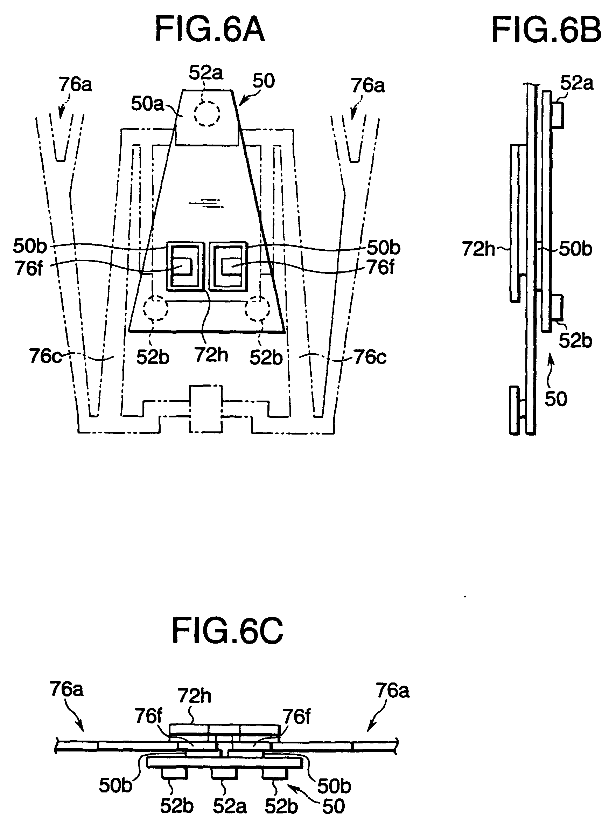

Figs. 6A to 6C are an enlarged view of the mounting portion 72h and the contact magnetic head 50 attached to the mounting portion 72h. In Figs. 6A to 6C, the contact magnetic head 50 is an induction type thin-film magnetic head produced by using a lithographic technique. On the bottom surface of the head chip 50a, there are provided a contact pad (magnetic pole pad) 52a having a magnetic pole, and two contact pads (auxiliary pads) 52b and 52b for stabilizing the contact state of the magnetic pole pad 52a. In addition, a magnetic circuit (not shown) for recording/reproducing magnetic information is formed inside the head chip 50a. Further, opposite ends of a coil (not shown) formed around the magnetic circuit are connected to Au pads 50b and 50b formed on the top surface of the head chip 50a.

These Au pads 50b and 50b are welded with the tips of the welded pieces 76f and 76f respectively. As a result, the dead weight of the contact magnetic head 50 is very light, that is, about $0.014 \times 10^{-3}$N, so that the contact magnetic head 50 is supported horizontally by the two support beams 76a and 76a insulated electrically in the no-load state. In addition, the contact magnetic head 50 is supported substantially stably by the two support beams 76a and 76a so that the contact pads can be brought into uniform contact with the magnetic recording medium.

Incidentally, the thickness of the head chip 50a of the contact magnetic head 50 used in the present invention is required to be not more than 100 μm. This is because a measure of flexibility is required of the head chip 50a in order to stabilize contact running. If the thickness of the head chip 50a exceeds 100 μm, the head chip 50a cannot follow a slight waving of the surface of the magnetic disk generated during contact running, so that it becomes undesirably difficult to bring the three contact pads into contact with the magnetic disk simultaneously. Preferably, the thickness of the head chip 50a is not more than 50 μm.

The size and number of the through holes 76d and 76d provided in the first beams 76b and 76b, the lateral width and length of the first beams 76b and 76b and the second beams 76c and 76c, or the like, may be determined so that the spring constants of the support beams 76a and 76a can take predetermined values.

Next, description will be made about a method for producing the support structure 60 according to this embodiment. First, the adapter 64 is disposed under the base plate 62, and they are put on top of each other so that the center of the round through holes 62b and 64a of the base plate 62 coincides with the center of the round through hole 64a of the adapter 64. Then, the base plate 62 and the adapter 64 are welded.

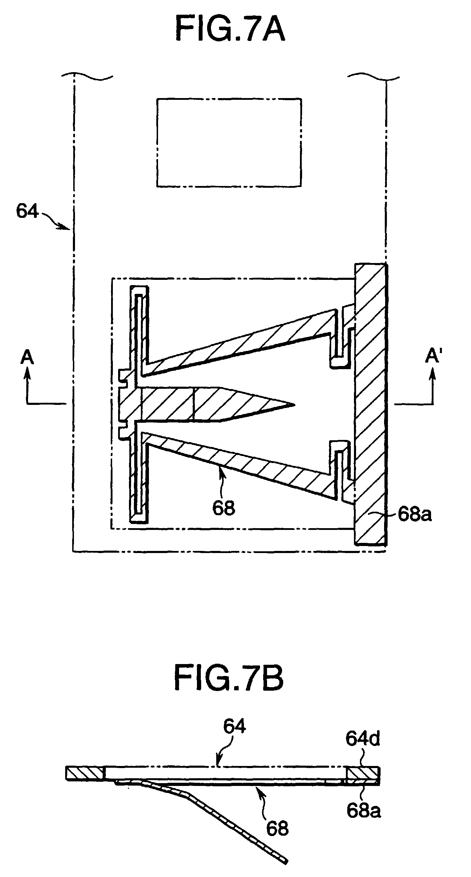

Next, the pivot spring 68 produced in advance is disposed under the adapter 64. The base portion 68a of the pivot spring 68 and the left arm portion 64d of the adapter 64 are put on each other, and welded with each other. Figs. 7A and 7B show the state where the pivot spring 68 and the adapter 64 have been welded. In Fig. 7A, the adapter 64 is indicated by the imaginary line (two-dot chain line), and hatching is given to the pivot spring 68, in order to make them easy to see.

Next, the contact magnetic head 50 produced in advance is disposed under the mounting portion 72h provided on the tips of the second beams 76c and 76c of the support 70 produced likewise in advance. The tips of the welded pieces 76f and 76f are put on, and welded with the Au pads 50b and 50b respectively.

Next, the support 70 mounted with the contact magnetic head 50 is disposed under the adapter 64 mounted with the pivot spring 68. The strip portion 72b of the support 70 and the right arm portion 64e of the adapter 64 are put on, and welded with each other. Then, it will go well if the protrusions 68f and 68f of the pivot spring 68 and the mounting piece 72e of the support 70 are used for positioning so that the two wiring windows 72c and 72c of the support 70 are exposed from the wiring window 64b of the adapter 64 and the load giving beam 68c comes on the center line of the mounting portion 72h. Figs. 8A and 8B show the state where the support 70 has been further welded with the adapter 64 which is also welded with the pivot spring 68. Incidentally, in Fig. 8A, the adapter 64 is indicated by the imaginary line (two-dot chain line), and hatching is given to the pivot spring 68, in order to make them easy to see.

As a result, the flexible portions 68e and 68e of the pivot spring 68 are supported by the overhang portions 72d and 72d of the support 70 respectively while the load giving beam 68c is lifted by the mounting piece 72e of the support 70. In addition, then, the load giving beam 68c is bent upward at its base end so that the flexible portions 68d, 68d, 68e and 68e of the pivot spring 68 are suitably distorted. As a result, a predetermined pressure force is given to the mounting portion 72h so that the contact magnetic head 50 is pushed down to a predetermined position away from the lower surface of the adapter 64.

Finally, lead wires are welded with the wiring portions 76h and 76h of the support 70 exposed from the wiring window 64b of the adapter 64. Thus, the assembly of the support structure 60 is completed.

Incidentally, the pivot spring 68 can be produced by cutting a plate-like pivot spring out of a sheet of stainless steel by means of etching or punching with a press and thereafter bending the load giving beam 68c by a press at predetermined bending angles $\alpha$ and $\beta$ as shown in Fig. 4B. On the other hand, the support 70 can be produced by etching a three-layer laminate material with a lithographic technique so as to eliminate unnecessary portions therefrom.

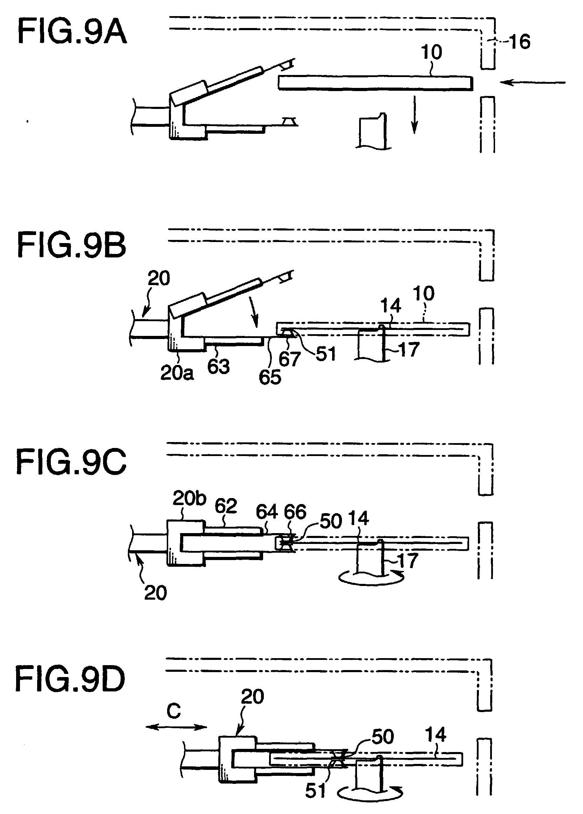

Next, description will be made about an example of a way of using the contact magnetic head 50 supported by the support structure 60 shown in Figs. 1 to 8. As shown in Fig. 9A, when a floppy disk 10 is thrown into a disk drive 16, a cover (not shown) slides so that windows (not shown) provided in the upper and lower surfaces of the floppy disk 10 open.

Next, as shown in Fig. 9B, the floppy disk 10 is set on a spindle 17. A base plate 63 has been attached to a fixation portion 20a of a tracking mechanism 20, while a contact magnetic head 51 (up-face head) has been provided on the tip of the base plate 63 through an adapter 65 and a bearer 67. Accordingly, when the floppy disk 10 is set on the spindle 17, the contact magnetic head 51 (up-face head) is in contact with the lower surface of a magnetic disk 14.

Next, as shown in Fig. 9C, a movable portion 20b of the tracking mechanism 20 is rotated downward. The base plate 62 has been attached to the movable portion 20b, while the contact magnetic head (down-face head) 50 has been provided on the tip of the base plate 62 through the adapter 64 and the bearer 66. Accordingly, when the movable portion 20b is rotated, the contact magnetic head 50 (down-face head) is in contact with the upper surface of the magnetic disk 14. In this state, the spindle 17 is rotated.

Then, as shown in Fig. 9D, the tracking mechanism 20 is moved forward/backward in the direction of the arrow C in the state where the magnetic disk 14 is held between the two contact magnetic heads 50 and 51. As a result, the contact magnetic heads 50 and 51 move onto a predetermined track so as to perform recording/reproducing magnetic information.

Next, description will be made about the operation of the support structure 60 according to the embodiment of the present invention. A support structure proposed in JP-A-9-198823 was developed for a hard disk. A support for supporting a contact magnetic head has a straight shape extending from an adapter toward the contact magnetic head. If this support structure were appropriated directly to one for a floppy disk, it would be inevitable to produce a gap center offset, as shown in Fig. 18B.

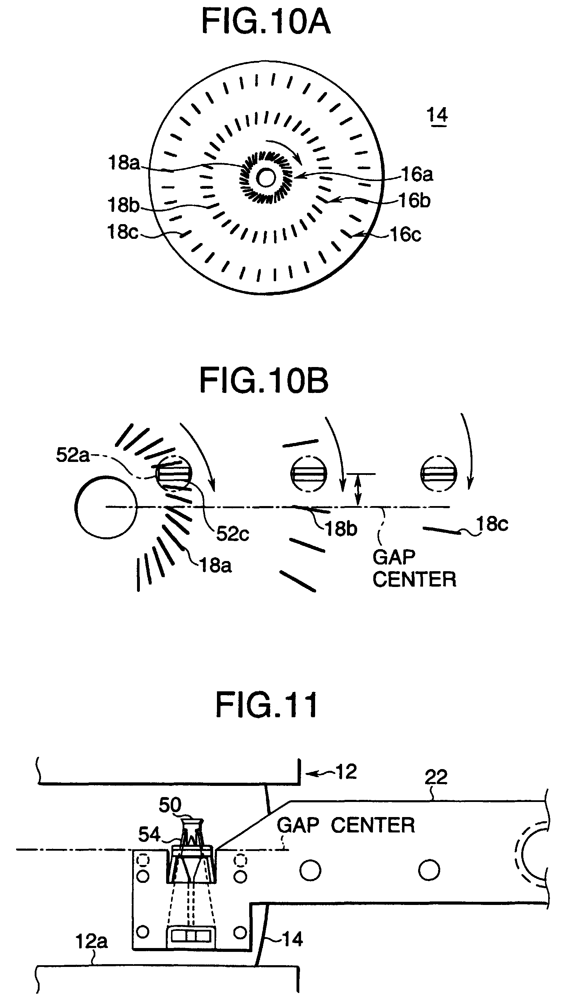

Figs. 10A to 10B show model views of the surface of the magnetic disk 14 in which magnetic information is recorded with a magnetic head in which a gap center offset is generated. In Fig. 10, on the surface of the magnetic disk 14, a large number of concentric tracks 16a, 16b, 16c ... are formed. The tracks 16a, 16b, 16c ... are divided into sectors 18a, 18b, 18c ... which are minimal units for magnetic recording.

As is understood from Fig. 10, when a gap center offset is generated, the sectors 18a, 18b, 18c ... are formed obliquely with respect to the gap center. Accordingly, with the rotation of the magnetic disk 14, the sectors 18a, 18b, 18c ... pass obliquely through the magnetic gap 52c provided in the magnetic pole pad tip 52a, so that the electromagnetic conversion efficiency is lowered. This inclination of the sectors 18a, 18b, 18c ... becomes larger in the track 16a which is on the inside of the magnetic disk 14 than in the track 16c which is on the outside, so that the electromagnetic conversion efficiency is lowered on a larger scale as the track approaches the center of the magnetic disk 14. Therefore, if the gap center offset is excessive, the vicinity of the center of the magnetic disk 14 cannot be used for magnetic recording.

This deterioration of the electromagnetic conversion efficiency due to the gap center offset causes a severe problem particularly in a magnetic head having a plurality of magnetic gaps (for example, a lower compatible machine, an MR head in which recording/reproducing are performed by different heads, or the like).

In order to solve this problem, for example, as shown in Fig. 11, it can be considered that the base end of the support 54 is made to overhang toward a side of the adapter 22, so that a magnetic pole pad (not shown) of the contact magnetic head 50 is disposed on the gap center. However, in such a support structure, it is inevitable to enlarge the window 12a of the card case 12 so that there is a problem that dust or the like is apt to invade the card case 12.

In addition, the window 12a becomes not only large in lateral width but also asymmetrical with respect to the gap center. To open/close such a window 12a, a complicated open/close mechanism is required to cause increase in cost. In addition, there is another problem that the strength of the card case 12 is lowered as the lateral width of the window 12a becomes large.

Further, a floppy disk may generate large fluctuations in Z-height in comparison with a hard disk structurally. If the length of the support 54 is reduced in order to reduce the width of the window 12a, slight fluctuations in the Z-height causes large fluctuations in the load applied to the contact pad. For example, in the support structure shown in Fig. 11, on the assumption that the whole length of the support 54 is 5 mm, fluctuations in a load Na applied to the magnetic pole pad 52a due to the fluctuations in the Z-height, and fluctuations in a load Ni applied to each of the auxiliary pads 52b and 52b also due to the fluctuations in the Z-height are obtained by arithmetic calculation the results of which are shown in the following Table 1.

Table 1

| Z-height ($\mu$m) | Na+Ni$\times$2 ($\times 10^{-3}$N) | Na ($\times 10^{-3}$N) | Ni$\times$2 ($\times 10^{-3}$N) |
|---|---|---|---|
| 152.4 | 2.11 | 1.42 | 0.69 |
| 304.8 | 1.47 | 0.87 | 0.60 |
| 457.2 | 0.83 | 0.32 | 0.51 |

It is understood from Table 1 that Na fluctuates in a range of from $0.32 \times 10^{-3}$N to $1.42 \times 10^{-3}$N as the Z-height fluctuates in a range of $\pm 152.4$ $\mu$m (=6 mil) from a reference value of 304.8 $\mu$m (=12 mil), and the ratio of the fluctuation width of Na to the fluctuation width of the whole load applied to the contact magnetic head 50 ( =Na+Ni$\times$2 ) (hereinafter, this will be referred to as "fluctuation ratio") amounts to 0.86. In addition, in the support structure shown in Fig. 11, this fluctuation ratio has a tendency to be larger as the length of the support 54 is shortened.

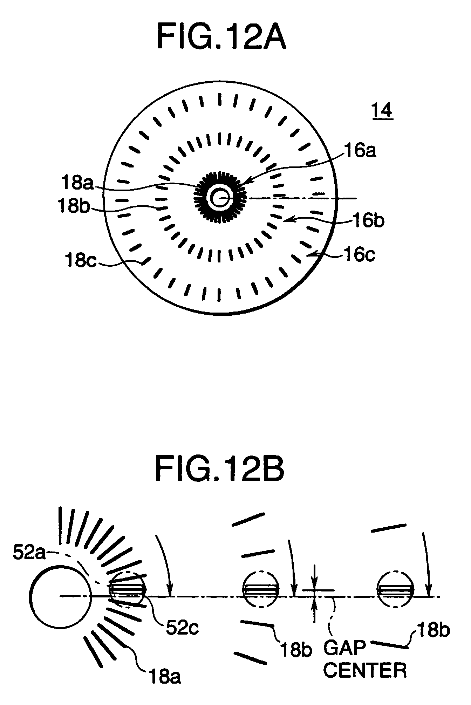

On the contrary, in the support structure 60 according to the present invention, the support beam 76a is constituted by the first beam 76b and the second beam 76c which are provided to extend in the directions opposite to each other, so that no gap center offset is generated intrinsically, while only a slight gap center offset due to an assembly error is generated. Therefore, as shown in Figs. 12A and 12B, the sectors 18a, 18b, 18c ... on the respective tracks 16a, 16b, 16c ... are formed substantially in parallel with the gap center. As a result, vertical components increase when the magnetic gap 52c runs across the sectors 18a, 18b, 18c ..., so that the deterioration of the electromagnetic conversion efficiency is restrained. In addition, even if a head having a plurality of magnetic gaps is used, the deterioration of the electromagnetic conversion efficiency is reduced.

In addition, not only the sectors 18c on the track 16c formed on the outer side of the magnetic disk 14 but also the sectors 18a on the track 16a formed on the inner side intersect the magnetic gap 52c substantially parallelly. Accordingly, it is possible to ensure a large recording area on the magnetic disk 14, so that it is possible to increase the memory capacity per magnetic disk 14.

In addition, it is possible to dispose the magnetic pole pad 52a on the gap center easily even in the case where the length of the first beams 76b and 76b is made substantially equal to the lateral width of the adapter 64. Accordingly, it is possible to apply the support structure directly to a general-purpose floppy disk. In addition, it is not necessary to enlarge the window width, so that there is less fear of contamination on the surface of the magnetic disk 14 due to the invasion of dust or the like. In addition, the window can be formed symmetrically with respect to the gap center, so that no complicated opening/closing mechanism is required.

In addition, since each of the support beams 76a and 76a is constituted by the first and second beams 76b and 76c which are provided to extend in the directions opposite to each other, the support structure has a feature that the fluctuations in counter torque generated in the contact magnetic head 50 due to the fluctuations in the Z-height is reduced. For example, on the assumption that the whole length of the first beams 76b and 76b is 3.5 mm, fluctuations in the load Na applied to the magnetic pole pad 52a due to the fluctuations in the Z-height, and fluctuations in the load Ni applied to the auxiliary pads 52b and 52b also due to the fluctuations in the Z-height are obtained by arithmetic calculation. The results of calculation are shown in the following Table 2.

Table 2

| Z-height (μm) | Na+Ni×2 ($\times 10^{-3}$N) | Na ($\times 10^{-3}$N) | Ni×2 ($\times 10^{-3}$N) |
|---|---|---|---|
| 152.4 | 2.25 | 1.01 | 1.24 |
| 304.8 | 1.47 | 0.65 | 0.82 |
| 457.2 | 0.69 | 0.29 | 0.40 |

It is understood from Table 2 that Na fluctuates in a range of from $1.01 \times 10^{-3}$N to $0.29 \times 10^{-3}$N as the Z-height fluctuates in a range of $\pm 152.4$ μm from a reference value of 304.8 μm, and the fluctuation ratio is 0.46, which is lowered on a large scale in comparison with that in the support structure shown in Fig. 11. This is because the support beam 76a is constituted by the first and second beams 76b and 76c provided to extend in the directions opposite to each other so as to absorb the counter torque due to the fluctuations in the Z-height. Therefore, in the support structure 60 according to this embodiment, stable contact running can be realized even in the case where the Z-height fluctuates comparatively largely. In addition, even in the case where the support structure is applied to a small-sized magnetic recording medium with a window the width of which is narrower than that in a general-purpose floppy disk, contact running can be stabilized without producing any gap center offset.

Further, in the case where a contact magnetic head is made to run in contact with a magnetic recording medium, it may be difficult for a contact pad to run smoothly when the surface of the magnetic recording medium is rough, so that self-induced vibration may be generated in the contact magnetic head along the running direction of the magnetic recording medium. If such self-induced vibration is generated, it becomes difficult to read magnetic information correctly from sectors arranged with high density.

This point appears also in the case where the contact magnetic head 50 is supported by the support structure 60 according to this embodiment. When the contact magnetic head 50 is made to run on a magnetic recording medium the surface of which is rough, the supports beams 76a and 76a are vibrated up/down by friction during the contact running. As a result, there is a fear that self-induced vibration is generated in the contact magnetic head 50 along the running direction of the magnetic recording medium.

However, in the support structure 60 according to this embodiment, a predetermined pressure force is given to the contact magnetic head 50 from its upper surface by the pivot spring 68, and then can be adjusted easily by controlling the shapes of the arm portion 68b, the load giving beam 68c, the flexible portions 68d and 68e, and the like. Accordingly, if the pressure force given by the pivot siring 68 is optimized in accordance with the friction coefficient on the surface of the magnetic recording medium, the up/down vibration of the support beams 76a and 76a due to the friction can be restrained, so that the self-induced vibration of the contact magnetic head 50 is also restrained.

Although an embodiment of the present invention has been described in detail, the present invention is not limited to the above-mentioned embodiment at all, but may be modified variously within the gist of the present invention.

For example, although the above-mentioned embodiment has been described mainly about the case where a structure for supporting a contact magnetic head according to the present invention is applied to a floppy disk in which a transverse system is adopted, the application range of the present invention is not limited to such a support structure for a floppy disk at all. The present invention may be applied to a support structure for a magnetic tape, or a support structure for a hard disk in which an in-line system is adopted.

Although the support 70 has two support beams 76a and 76a in the above-mentioned embodiment, the contact magnetic head 50 may be supported by one support beam 76a or three or more support beams 76a. For example, in the case where an MR head is used as the contact magnetic head, four electrodes in total are required. Therefore, the MR head may be supported by two support beams 76a, and each of the support beams 76a may be provided with two electrodes insulating from each other. Alternatively, the MR head may be supported by four support beams 76a which are independent of one another.

Although the support beams 76a and 76a are provided to extend in parallel with the magnetic recording medium in the no-load state, the support beams 76a and 76a may be bent suitably so as to extend obliquely downward with respect to the magnetic recording medium. In addition, although the support beam 76a is constituted by two sub-beams which are the first and second beams 76b and 76c, a support beam in which three or more sub-beams are connected zigzag may be used as the support beam 76a. In this case, the width and length of the support beam, the size and number of the through hole and the like may be adjusted to obtain a predetermined spring constant in the same manner as in the above-mentioned embodiment.

Although the support beam 76a is provided to extend in the running direction of the magnetic disk, the extending direction of the support beam 76a is not limited to this, but may be a direction perpendicular to the running direction of the magnetic recording medium.

Although the support beams 76a are connected to each other by bridges at the two places, that is, at the centers and at the tips, the first beams 76a may be connected by three or more bridges, or the second beams may be connected by one or more bridges.

Although the pivot spring 68 has the arm portions 68b provided to extend in the directions opposite to each other and the load giving beam 68c in the above-mentioned embodiment, a pivot spring constituted only by a load giving beam may be provided to extend from the left or right arm portion 64d or 64e of the adapter 64 toward the contact magnetic head 50.

Further, the flexible portions provided in the pivot spring 68 are not limited to those which are bent into a reclined-U-shape. For example, flexible portions bent into a U-shape may be provided. Alternatively, through holes are provided so as to form the flexible portions near the base end and/or tip of the arm portion 68b, or those portions are reduced in thickness to form the flexible portions thereat. Thus, effects similar to those in the above-mentioned embodiment can be obtained.

According to the present invention, in a structure for supporting a contact magnetic head having a contact pad with a magnetic pole, the structure constituted by a support having a support beam formed from elastic material and for supporting the contact magnetic head, and a contact pressure giving means for giving pressure to a contact surface between the contact pad and a magnetic recording medium, the support beam is constituted by first and second beams provided to extend in the directions opposite to each other, so that there is an effect that it is difficult to produce a gap center offset. In addition, it is not necessary to widen the window width, so that there is an effect that contamination on the surface of the magnetic recording medium is restrained. Further, there is an effect that the support structure can be easily applied also to a magnetic recording medium having a narrow window.

In addition, the fluctuations in a contact load due to the fluctuations in Z-height is reduced by the support beam having the first and second beams provided to extend in the directions opposite to each other and the contact pressure giving means, so that there is an effect that abrasion of the magnetic pole pad is restrained and contact running is stabilized. Further, if the pressure force given by the contact pressure giving means is optimized, self-induced vibration due to the friction between the contact pad and the magnetic recording medium is also restrained.

In addition, if two support beams are provided to extend from the support to support the contact magnetic head, there is an effect that the contact magnetic head can be supported stably. In addition, in the case where the two support beams are connected by using at least one bridge, there is an effect that the rigidity of the support beams can be improved and it is possible to restrain self-induced vibration produced when the contact magnetic head follows a servo signal. Particularly, in the case where the vicinities of the tips of the first beams are connected by the bridges, there is an effect that it is possible to restrain self-induced vibration due to opening/closing of the two support beams right/left.

In addition, in the case where the contact pressure giving means has arm portions and a load giving beam which are provided to extend in the directions opposite to each other, there is an effect that it becomes easy to attach both the contact pressure giving means and the support into a narrow space of an adapter.

Further, in the case where flexible portions are provided near the base ends and/or tips of the arm portions of the contact pressure giving means, there is an effect that it becomes easy to control the pressure force given by the contact pressure giving means. Particularly in the case where the flexible portions are formed by bending the arm portions sideways, there is an effect that the pressure force given by the contact pressure giving means can be controlled easily by optimizing the length, lateral width, and the like, of the flexible portions.

As has been described above, in the structure for supporting a contact magnetic head according to the present invention, a thin-film-type contact magnetic head can be applied to recording/reproducing not only a general-purpose floppy disk but also a magnetic recording medium which is smaller than the general-purpose floppy disk. As a result, the recording density of the floppy disk can be increased on a large scale. The present invention has great industrial effects.

**Claims**

1.    A structure (60) for supporting a contact magnetic head (50) having a contact pad (52a) with a magnetic pole, said structure comprising:

   a support (70) having a support beam (76a) formed from elastic material, for supporting said contact magnetic head (50); and

   a contact pressure giving means for giving pressure to a contact surface between said contact pad and a magnetic recording medium;
   wherein said support beam (76a) comprises:

a first beam (76b) and

a second beam (76c) provided to have a base end near a tip of said first beam (76b) and extend from said base end in a direction opposite to said first beam (76b).

2. The structure (60) for supporting a contact magnetic head (50) according to claim 1, wherein said support (60) comprises two said support beams (76a, 76a) for supporting said contact magnetic head.

3. The structure (60) for supporting a contact magnetic head (50) according to claim 2, further comprising at least one cross (72f, 72g) beam for connecting said two support beams (76a, 76a).

4. The structure (60) for supporting a contact magnetic head (50) according to claim 3, wherein one of said cross beams (72g) connects vicinities of tips of said respective first beams (76b, 76b).

5. The structure (60) for supporting a contact magnetic head (50) according to claim 1, wherein said contact pressure giving means comprises: an arm portion (68b); and a load giving beam (68c) provided to have a base end near a tip of said arm portion (68b) and extend from said base end in a direction opposite to said arm portion.

6. The structure (60) for supporting a contact magnetic head (50) according to claim 5, further comprising a flexible portion (68d) provided near at least one of a base end and tip of said arm portion (68b).

7. The structure (60) for supporting a contact magnetic head (50) according to claim 6, wherein said flexible portion (68d) is formed by bending said arm portion (68b) sideways.

FIG.1A

FIG.1B

FIG.1C

⟹ DISK ROTATIONAL DIRECTION

# FIG.2A

62b    62c    62d    62    62a    62f

62e

# FIG.2B

# FIG.3A

64c    64e    64b    64a    64

64d

# FIG.3B

# FIG.4A

68e  68f  68f  68e  68

68c

68b  68b

68d  68d

68a

# FIG.4B

68c

68b

$\alpha$

$\beta$

68a

EP 1 093 117 A2

# FIG.5A

# FIG.5B

_70_

# FIG.5C

DISK ROTATIONAL
DIRECTION

# FIG.6A

# FIG.6B

# FIG.6C

# FIG.7A

# FIG.7B

# FIG.8A

# FIG.8B

**FIG.9A**

10
16

**FIG.9B**

20
20a 63 65 67 51 14 10 17

**FIG.9C**

20b 62 64 66 50 14 17
20

**FIG.9D**

C 20 50 14 51

EP 1 093 117 A2

# FIG.10A

# FIG.10B

# FIG.11

# FIG.12A

# FIG.12B

# FIG.13

# FIG.14

# FIG.15

# FIG.16A

# FIG.16C

# FIG.16B

# FIG.17A

# FIG.17B

# FIG.18A

# FIG.18B

# FIG.19A

$Z > Z_0$

22

56

14

M

54

52a

50a

52b

# FIG.19B

22

56

$Z < Z_0$

14

54

M' ≒ M

# FIG.19C

22

$Z > Z_0$

M

14

54

52a

# FIG.19D

22

$Z < Z_0$

M' < M

14

54

52a